(19) Europäisches Patentamt
European Patent Office
Office européen des brevets

(11) Numéro de publication: **0 004 226**
**B1**

(12) # FASCICULE DE BREVET EUROPEEN

(45) Date de publication du fascicule de brevet: **25.02.81**

(21) Numéro de dépôt: **79400120.6**

(22) Date de dépôt: **27.02.79**

(51) Int. Cl.³: **C 01 F 17/00**, C 22 B 59/00, C 22 B 3/00

(54) **Procédé de séparation des éléments du groupe constitué par les lanthanides et l'yttrium.**

(30) Priorité: **10.03.78 FR 7806926**

(43) Date de publication de la demande: **19.09.79 Bulletin 79/19**

(45) Mention de la délivrance du brevet: **25.02.81 Bulletin 81/8**

(84) Etats contractants désignés: **BE CH DE FR GB IT LU NL SE**

(56) Documents cités:
**AU-A-448 131**
**CHEMICAL ABSTRACTS, vol. 81, n° 2, July 15, 1974, ref 6721e, page 187 Columbus, Ohio, USA**
**COMPTES – RENDUS HEBDOMADAIRES DES SEANCES DE L'ACADEMIE DES SCIENCES Paris Gauthier–Villar Editeur, tome 273, 27. octobre 1971, n° 17, Série C, pages 1073–1076**
**GMELIN HANDBUCH DER ANORGANISCHEN-CHEMIE, Springer Verlag, Berlin–Heidelberg, New York, 1976 8. Auflage, Teil B1, System n° 39, page 134**

(73) Titulaire: **RHONE-POULENC INDUSTRIES, 22, avenue Montaigne, F-75008 Paris (FR)**

(72) Inventeur: **Helgorsky, Jacques, 21, rue de la République, F-95740 Frepillon (FR)**
Inventeur: **Leveque, Alain, 8-10, rue Manin, F-75019 Paris (FR)**

(74) Mandataire: **Savina, Jacques et al, RHONE POULENC Service Brevets Chimie et Polymères B.P. 753, F-75360 Paris Cedex 08 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 004 226 B1

BUNDESDRUCKEREI BERLIN

Procédé de séparation des éléments du groupe constitué par les lanthanides et l'yttrium

La présente invention concerne un procédé de séparation par extraction par solvant de composés métalliques contenus dans des solutions aqueuses. Elle a trait, plus particulièrement, à la séparation au moyen d'hydroxyquinoléines d'au moins un élément, choisi parmi le groupe constitué par les lanthanides et l'yttrium, des autres éléments de ce groupe contenus dans une solution aqueuse.

Il est bien connu que les lanthanides, c'est-à-dire les éléments ayant des numéros atomiques compris entre 57 et 71, et l'yttrium sont difficiles à séparer du fait de la similitude de leurs propriétés et en particulier de leurs rayons ioniques.

On a déjà proposé pour séparer les lanthanides et l'yttrium contenus dans des solutions aqueuses, de les soumettre à une extraction par une solution organique comprenant notamment, soit des composés organo-phosphorés neutres ou acides, soit des amines ou des sels d'ammonium quaternaires, soit des acides carboxyliques; cependant, de tels procédés ne sont pas toujours complètement satisfaisants car, dans certains cas, les solvants employés ne présentent pas des facteurs de séparation suffisants ou peuvent conduire à des coûts de fonctionnement importants, en particuiier dans le cas de la régénération des composés organo-phosphorés acides.

Par ailleurs, il a déjà été proposé, selon l'article du Compte rendu hebdomadaire de l'Académie des Sciences de Paris, tome 273, du 27 Octobre 1971, série C, pages 1073 à 1076, d'extraire sélectivement l'europium à l'état divalent des autres terres rares au degré d'oxydation + III par la [7 (O-carbométhoxyanilino)benzyl] 8-hydroxyquinoléine ou CMAB-oxine en solution dans le chloroforme. Selon les auteurs de cet article, les résultats obtenus sont différents de ceux attends puisque l'ion $Eu^{3+}$ est extrait légèrement avant l'ion $Eu^{2+}$, toutefois, la séparation d'$Eu^{2+}$ et d'$Eu^{3+}$ doit être possible si l'on superpose à la réaction d'extraction une réaction de formation de complexes dans la phase aqueuse avec l'EDTA.

Le degré d'oxydation + III est la forme normale des ions terres rares, mais quelques éléments ont la possibilité d'être stabilisés aisément à degré d'oxydation supérieur (IV pour le cérium et la praséodyme) ou inférieur (II pour l'europium et le samarium). Le changement du degré d'oxydation correspond, en plus de la variation du rayon de l'ion considéré, à des variations importantes des propriétés chimiques. Ce sont ces différences, bien connues de l'Homme de l'Art, que l'on a tenté d'exploiter dans le procédé décrit ci-dessus pour séparer l'europium à l'état divalent des autres terres rares à l'état trivalent. Outre l'insuccès apparent des résultats obtenus, la solution préconisée présente l'inconvénient de nécessiter la mise en œuvre d'un complexant en plus de l'extractant.

Il a de plus été proposé selon un article du Gmelin Handbuch der Anorganischen Chemie (Springer Verlag, Berlin—Heidelberg, New York, 1976, 8. Auflage, Teil B1, System no 39, page 134) de séparer notamment le scandium de l'yttrium et des lanthanides au moyen d'un agent d'extraction constitué par le mélange de l'oxine ou de la 5,7 dichloro-8 hydroxyquinoléine et d'un autre composé pris dans le groupe comportant: le 2-2' dihydroxyazobenzène, 4-nitro-2,2' dihydroxy-5-méthylazobenzène, 5-nitro-2,2' dihydroxy-5'-méthylazobenzène, 4-nitro-2,2' dihydroxy-4'-méthyl-5'-isopropylazobenzène, 5-chloro-2,2' dihydroxybenzène (l-azo-l')-naphtalène.

Les valeurs des constantes d'extraction de certaines terres rares avec l'oxine (8-hydroxyquinoléine) ont déjà été mentionnées dans la littérature (Pyatnicky I. V. et Gavrilova E. F. Zh. Anal. Khim. 25, 445, 1970). Les valeurs des constantes d'extraction indiquées le néodyme et le samarium ont été déterminées au cours d'expériences différentes. La valeur des constantes d'extraction issues d'une même série d'expériences est également donnée dans cet article pour le dysprosium, l'holmium, l'erbium, le tullium et l'ytterbium. De ces résultats épars, et provenant le plus souvent d'une détermination très imprécise, l'omme de l'Art ne peut absolument pas préjuger de la sélectivité de l'oxine pour séparer par extraction au moins une terre rare d'une solution aqueuse, contenant un mélange de celles-ci.

Par ailleurs, on peut noter que l'oxine présente un grand nombre d'inconvénients sur le plan industriel et notamment: une trop grande solubilité dans l'eau qui entraine des pertes importantes, une faible capacité de changement et une faible solubilité dans les solvants organiques utilisés industriellement en extraction liquide-liquide comme les coupes pétrolières du type kérosène ou Solvesso.

La demanderesse a découvert qu'une nouvelle classe de solvants obviait aux inconvénients précités et permettait de réaliser la séparation d'au moins un élément choisi parmi le groupe constitué par les lanthanides et l'yttrium des autres éléments de ce groupe contenus dans une solution aqueuse, dans des conditions particulièrement avantageuses.

Plus précisément, le procédé selon la présente invention permet de séparer, dans une solution aqueuse, au moins un élément choisi parmi le groupe constitué par les lanthanides et l'yttrium à l'état trivalent des autres éléments de ce groupe contenus dans ladite solution et ceci avec une excellente sélectivité du fait que les facteurs de séparation sont trés importants et croissent globalement dans le sens des numéros atomiques croissants des lanthanides, c'est-à-dire du lanthane au lutétium, l'yttrium occupant une position intermédiaire.

La présente invention concerne un procédé de séparation, par extraction par lovant, d'au moins un élément choisi parmi le groupe constitué par les lanthanides et l'yttrium des autres éléments de ce groupe contenus dans une solution aqueuse, caractérisé en ce que l'on met en contact ladite solution aqueuse contenant les lanthanides et l'yttrium à l'état trivalent avec une phase organique comportant au moins une hydroxyquinoléine substituée.

L'hydroxyquinoléine, selon le procédé de l'invention, extrait par complexation l'un au moins des éléments du groupe constitué par les lanthanides et l'yttrium de la solution aqueuse. Dans les conditions de l'invention, elle doit être plus soluble dans la phase organique que dans la phase aqueuse.

Les hydroxyquinoléines convenant aux fins de l'invention sont notamment les hydroxyquinoléines substituées de formule générale

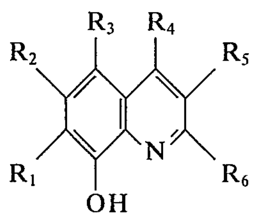

dans laquelle $R_1$, $R_2$, $R_3$, $R_4$, $R_5$, $R_6$, identiques ou différents, sont choisis parmi le groupe constitué par l'hydrogène, les halogènes, et au moins un des radicaux substitués ou non: alkyle, alcényle, cycloaliphatique, aromatique, $R_1$, $R_2$, $R_3$, $R_4$, $R_5$, $R_6$, ne pouvant représenter simultanément l'hydrogène.

Les hydroxyquinoléines substituées convenant aux fins de l'invention sont notamment celles de formule générale

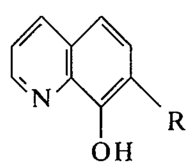

dans laquelle R est un radical alcényle éventuellement substitué contenant de préférence de 2 à 20 atomes de carbone.

Parmi ces hydroxyquinoléines, celles convenant particulièrement aux fins de l'invention sont notamment:

— les $\alpha$ alcényl hydroxy-8 quinoléines ayant pour formule générale

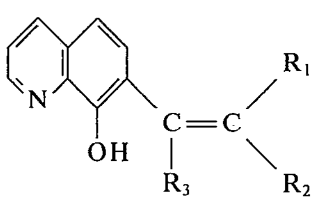

dans laquelle $R_1$, $R_2$, $R_3$ représentent un hydrogène ou un groupement hydroxarboné éventuellement substitué;

— les $\beta$ alcényl hydroxy-8 quinoélines ayant pour formule générale

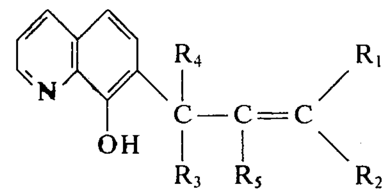

dans laquelle $R_1$, $R_2$, $R_3$, $R_4$, $R_5$ représentent un hydrogène ou un groupement hydrocarboné éventuellement substitué.

Conviennent églament particulièrement aux fins de l'invention, les alkyl hydroxy-8 quinoléines ayant pour formule générale

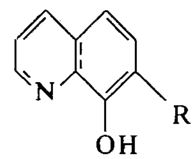

dans laquelle R représente un radical, éventuellement substitué, alkyle et/ou cycloaliphatique, et contenant de préférence de 1 à 20 atomes de carbone.

Conviennent également aux fins de l'invention, les hydroxy-8 quinoléines de formule générale

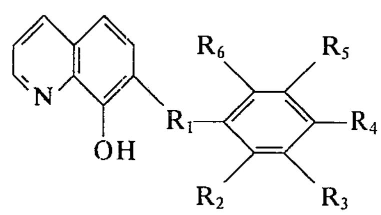

dans laquelle $R_1$ représente un radical hydrocarboné éventuellement substitué et $R_2$, $R_3$, $R_4$, $R_5$, $R_6$, représentent un hydrogène ou un groupement hydrocarboné éventuellement substitué.

Conviennent également aux fins de l'invention, les hydroxy-8 quinoléines de formule générale

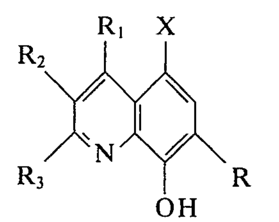

dans laquelle X est choisi parmi le groupe constitué par les halogènes, R est un radical alkyle ou alcényle contenant de préférence de 5 à 20 atomes de carbone, $R_1$, $R_2$, $R_3$, identiques ou différents étant choisis parmi le groupe comprenant l'hydrogène et les groupes alkyles ayant de préférence de 1 à 4 atomes de carbone.

La phase organique selon le procédé de l'invention contient généralement, outre l'hydroxyquinoléine, un diluant organique n'altérant pas les propriétés complexantes de l'hydroxyquinoléine. Comme diluants susceptibles d'être utilisés, on citera les hydrocarbures aromatiques comme le xylène, le toluène, le benzène, le diéthylbenzène ou des coupes pétrolières du type Solvesso (marque déposée par Exxon); les hydrocarbures aliphatiques comme l'hexane, le cyclohexane et les coupes pétrolières du type kérosène; les hydrocarbures halogénés comme le chloroforme, le tétrachlorure de carbone; les éthers de pétrole, etc.... Ils peuvent être utilisés seuls ou en mélange.

La phase organique selon le procédé de l'invention peut également contenir divers agents modifieurs dont un des buts essentiels est d'améliorer les propriétés hydrodynamiques du système sans altérer les propriétés complexantes de l'hydroxyquinoléine. Parmi les composés convenant bien, on peut citer notamment, les corps à fonction alcool, et, en particulier, les alcools lourds dont le nombre d'atomes de carbone est compris entre 4 et 15, et les phénols lourds, ainsi que divers autres composés teils que certains esters phosphoriques comme le butylphosphate, les oxydes de phosphine ou les sulfoxydes. Une proportion comprise entre 3 et 20% en volume rapportée à la phase organique est généralement favorable.

Le pouvoir d'extraction de la solution organique vis-à-vis des lanthanides et de l'yttrium, augmente lorsqu'on augmente la concentration de l'hydroxyquinoléine dans la phase organique; cependant, les facteurs de séparation des éléments entre eux ne sont pas modifiés de façon notable par la concentration en hydroxyquinoléine. Ainsi, la concentration en hydroxyquinoléine dans la phase organique n'est pas un facteur critique selon l'invention et peut varier dans de larges limites.

La phase aqueuse que l'on met en contact avec l'hydroxyquinoléine selon le procédé de l'invention peut contenir les éléments du groupe constitué par les lanthanides et l'yttrium, sous forme de perchlorates, de nitrates, de chlorures, de sulfates ou de thiocyanates.

La quantité des éléments extraits dans la phase organique dépend du pH de la phase aqueuse traitée et varie selon les éléments. En pratique, l'extraction doit être réalisée à des pH allant de 3 à 8. La quantité des éléments extraits peut, par ailleurs, être réglée par ajout à la phase aqueuse d'une base et, en particulier, d'ammoniaque ou d'une base alcaline, En général, le pH à mettre en œuvre est d'autant plus faible dans la fourchette donnée que le numéro atomique de l'élément que l'on désire extraire est élevé. Le procédé de l'invention permet dans ces conditions de réaliser l'extraction de l'un au moins des éléments du groupe constitué par les lanthanides et l'yttrium et sa séparation des autres éléments du groupe, avec une excellente sélectivité. Les élements extraits peuvent être séparés de la phase organique par mise en contact de cette dernière avec une solution aqueuse d'un acide minéral, tel que par exemple l'acide nitrique, l'acide sulfurique, l'acide chlorhydrique ou l'acide perchlorique. La quantité d'acide employée à cet effet doit être telle que le pH final de la phase aqueuse soit inférieur à 3.

Le procédé de l'invention qui permet de réaliser des séparations entre plusieurs éléments du groupe constitué par les lanthanides et l'yttrium ou entre couples d'éléments de ce groupe peut être mis en œuvre dans les dispositifs classiques utilisés dans les procédés d'extraction liquide/liquide. De tels dispositifs comprennent généralement plusieurs étages de système mélangeurs-décanteurs agencés de façon classique pour réaliser les opérations d'extraction, de lavage sélectif (stripping) et de récupération en phase aqueuse des éléments extraits.

Les exemples suivants donnés à titre non limitatif illustrent le procédé de l'invention sans en limiter la portée.

Exemple 1

800 ml d'une solution aqueuse de nitrates de lanthanides à pH: 3 contenant par litre 30 g de gadolinium et 30 g de terbium, ces concentrations étant exprimées en oxydes, est mise en contact avec 1 litre d'une phase organique constituée par:

30% d'hydroxyquinoléine A
10% de n-décanol
60% de kérosène

les pourcentages étant exprimés en volume et rapportés à la phase organique: l'hydroxyquinoléine A ayant la formule suivante:

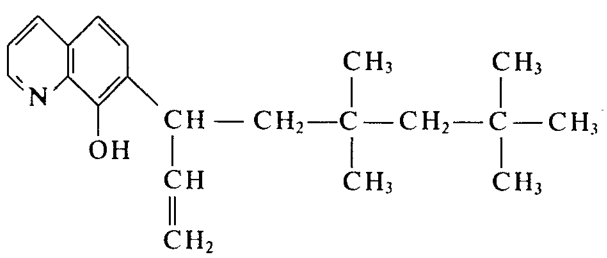

c'est le composé actif du produit vendu par la Société Ashland Chemical sous la marque Kélex 100. On ajoute progressivement sous agitation 200 ml d'une solution d'hydroxyde de sodium à 2 moles/l, le pH devient égal à 5,5. On sépare les phases aqueuse et organique que l'on analyse. Les concentrations exprimées en gramme d'oxydes par litre dans la phase aqueuse sont pour

le gadolinium de 16,4 g/l
le terbium de 6,9 g/l

et dans la phase organique, elles sont pour

le gadolinium de 7,6 g/l
le terbium de 17,1 g/l

On constate donc un enrichissement très important de la phase aqueuse en gadolinium et inversement de la phase organique en terbium. En d'autres termes, le facteurs de séparation $F_{Tb/Gd}$ qui est défini comme le rapport des coefficients de partages des éléments est égal à 5,4.

Exemple 2

Pour illustrer la sélectivité du procédé de l'invention pour la séparation d'au moins un élément choisi dans le groupe constitué par les lanthanides et l'yttrium, on opère selon le mode opératoire donné dans l'Exemple 1, toujours en milieu nitrate avec l'hydroxyquinoléine A en mettant œuvre deux éléments quelconques choisis parmi le groupe défini ci-dessus. Ceci permet de déterminer les facteurs de séparation pour les couples considérés. Pour présenter les résultats obtenus, on exprime les facteurs de séparation de chaque élément par rapport à l'yttrium, ces résultats sont rassemblés dans le tableau ci-dessous, T.R. symbolisant la terre rare considérée.

| T. R. | Nd | Sm | Eu | Gd | Tb | Dy | Ho | Er | Tm | Yb | Lu |
|---|---|---|---|---|---|---|---|---|---|---|---|
| $\frac{F_{TR}}{Y}$ | 0,022 | 0,34 | 0,69 | 0,56 | 3,0 | 6,4 | 10,1 | 12,3 | 23,7 | 38,6 | 27,4 |

Exemple 3

On opère comme dans l'exemple 2 avec l'hydroxyquinoléine A mais en milieu chlorure. Les facteurs de séparation de chaque élément par rapport à l'yttrium sont donnés dans le tableau ci-dessous:

| T. R. | Nd | Sm | Eu | Gd | Tb | Dy | Ho | Er | Tm | Yb | Lu |
|---|---|---|---|---|---|---|---|---|---|---|---|
| $\frac{F_{TR}}{Y}$ | 0,12 | 1,3 | 2,0 | 1,3 | 3,8 | 4,9 | 5,2 | 4,0 | 5,0 | 5,4 | 3,7 |

Exemple 4

On opère comme dans l'exemple 2 en milieu nitrate mais en mettant en œuvre l'hydroxyquinoléine B de formule suivante:

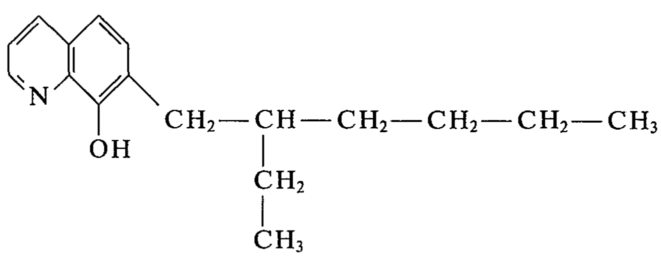

Les facteurs de séparation de chaque élément par rapport à l'yttrium sont donnés dans le tableau ci-après:

| T. R. | Nd | Sm | Eu | Gd | Tb | Dy | Ho | Er | Tm | Yb | Lu |
|---|---|---|---|---|---|---|---|---|---|---|---|
| $\frac{F_{TR}}{Y}$ | 0,043 | 0,47 | 0,90 | 0,69 | 3,3 | 6,6 | 9,4 | 9,7 | 18,6 | 23,3 | 17,2 |

Exemple 5

On opère comme dans l'exemple 2, mais avec l'hydroxyquinoléine B telle que décrite dans l'exemple 4 et en milieu chlorure. Les facteurs de séparation de chaque élément par rapport à l'yttrium sont donnés dans le tableau ci-dessous.

| T. R. | Nd | Sm | Eu | Gd | Tb | Dy | Ho | Er | Tm | Yb | Lu |
|---|---|---|---|---|---|---|---|---|---|---|---|
| $F_{TR}$ | 0,064 | 0,72 | 1,3 | 0,89 | 4,2 | 8,0 | 9,7 | 8,5 | 12,4 | 17,3 | 12,1 |

Les valeurs des facteurs de séparation données dans les exemples ci-dessus permettent de calculer les conditions à mettre en œuvre pour séparer deux ou plusieurs éléments pris dans le groupe constitué par les lanthanides et l'yttrium selon les techniques classiques d'extraction liquide/liquide.

**Revendications**

1. Procédé de séparation, par extraction par solvant, d'au moins un élément choisi parmi le groupe constitué par les lanthanides et l'yttrium des autres éléments de ce groupe contenus dans une solution aqueuse, caractérisé en ce que l'on met en contact ladite solution aqueuse contenant les lanthanides et l'yttrium à l'état trivalent avec une phase organique contenant au moins une hydroxyquinoléine substituée de formule générale

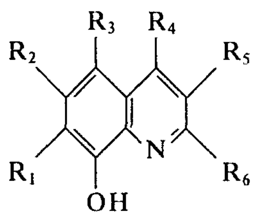

dans laquelle $R_1$, $R_2$, $R_3$, $R_4$, $R_5$, $R_6$, identiques ou différents sont choisis parmi le groupe constitué par l'hydrogène, les halogènes et les radicaux: alkyle, alcényle, cycloaliphatique, aromatique; $R_1$, $R_2$, $R_3$, $R_4$, $R_5$, $R_6$ ne pouvant simultanément représenter l'hydrogène.

2. Procédé selon la revendication 1, caractérisé en ce que l'hydroxyquinoléine substituée a pour formule générale:

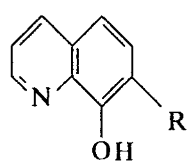

dans laquelle R est un radical alcényle contenant 2 à 20 atomes de carbone.

3. Procédé selon la revendication 2, caractérisé en ce que l'hydroxyquinoléine substituée a pour formule générale:

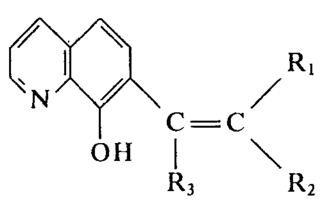

dans laquelle $R_1$, $R_2$, $R_3$ représentent un hydrogene ou un groupement hydrocarboné.

4. Procédé selon la revendication 2, caractérisé en ce que l'hydroxyquinoléine substituée a pour formule générale:

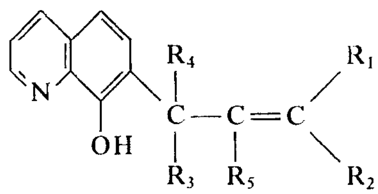

dans laquelle $R_1$, $R_2$, $R_3$, $R_4$, $R_5$ représentent un hydrogène ou un groupement hydrocarboné.

5. Procédé selon la revendication 1, caractérisé en ce que l'hydroxyquinoléine substituée a pour formule générale:

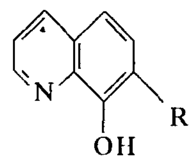

dans laquelle R représente un radical contenant de 1 à 20 atomes de carbone et pris dans le groupe constitué par auf moins un des radicaux alkyle et cycloaliphatique.

6. Procédé selon la revendication 1, caractérisé en ce que l'hydroxyquinoléine substitué a pour formule générale

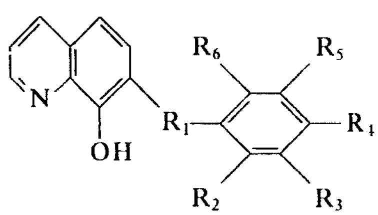

dans laquelle $R_1$ représente un radical alkyle, $R_2$, $R_3$, $R_4$, $R_5$, $R_6$ représentent un hydrogène ou un groupement hydrocarboné.

7. Procédé selon la revendication 1, caractérisé en ce que l'hydroxyquinoléine substituée a pour formule générale

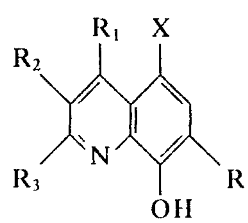

dans laquelle X est choisi parmi le groupe constitué par les halogènes, R est un radical alkyle ou alcényle contenant de 5 à 20 atomes de carbone, $R_1$, $R_2$, $R_3$, identiques ou différents,

étant choisis parmi le groupe comprenant l'hydrogène et les groupes alkyles ayant de Préférence de 1 à 4 atomes de carbone.

8. Procédé selon la revendication 1, caractérisé en ce que la phase organique comporte en outre au moins un diluant organique choisi parmi le groupe constitué par les hydrocarbures aromatiques, les hydrocarbures aliphatiques, les hydrocarbures halogénés, les coupes pétrolières, les éthers de pétrole.

9. Procédé selon la revendication 1, caractérisé en ce que la phase organique comporte en outre au moins un agent modifieur choisi parmi le groupe constitué par les corps à fonction alcool, les esters phosphoriques, les oxydes de phosphine, les sulfoxydes.

10. Procédé selon la revendication 1, caractérisé en ce que les éléments du groupe constitué par les lanthanides et l'yttrium sont dans la phase aqueuse sous la forme de chlorures, nitrates, sulfates, perchlorates, ou thiocyanates.

11. Procédé selon la revendication 1, caractérisé en ce que le pH de la phase aqueuse est compris entre 3 et 8.

12. Procédé selon la revendication 11, caractérisé en ce que le pH de la phase aqueuse est réglé par ajout d'une base.

13. Procédé de séparation, par extraction par solvant, d'au moins un élément choisi parmi le groupe constitué par les lanthanides et l'yttrium des autres éléments de ce groupe contenus dans une solution aqueuse, caractérisé en ce que:

— dans une première étape, on met en contact ladite solution aqueuse contenant les lanthanides et l'yttrium à l'état trivalent avec une phase organique contenant au moins une hydroxyquinoléine substituée de formule générale

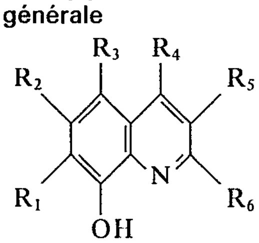

dans laquelle $R_1$, $R_2$, $R_3$, $R_4$, $R_5$, $R_6$, identiques ou différents, sont choisis parmi le groupe constitué par l'hydrogène, les halogènes et les radicaux: alkyle, alcényle, cycloaliphatique, aromatique; $R_1$, $R_2$, $R_3$, $R_4$, $R_5$, $R_6$ ne pouvant simultanément représenter l'hydrogène;

— dans une deuxième étape, le ou les élément(s) extraits sont récupérés de la phase organique par mise en contact de cette dernière avec une solution aqueuse d'un acide minéral.

14. Procédé selon la revendication 13, caractérisé en ce que l'acide minéral est choisi parmi le groupe constitué par l'acide chlorhydrique, l'acide nitrique, l'acide perchlorique, l'acide sulfurique.

**Patentansprüche**

1. Verfahren zur Abtrennung wenigstens eines Elements aus der Lanthanide und Yttrium umfassenden Gruppe von anderen Elementen dieser Gruppe, die in einer wäßrigen Lösung enthalten sind, durch Lösungsmittelextraktion, dadurch gekennzeichnet, daß man die wäßrige, die Lanthanide und Yttrium in dreiwertigem Zustand enthaltende Lösung mit einer organischen Phase in Berührung bringt, die wenigstens ein substituiertes Hydroxychinolin der allgemeinen Formel

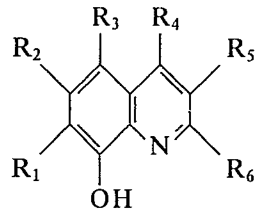

enthält, in der die gleichen oder verschiedenen Reste $R_1$, $R_2$, $R_3$, $R_4$, $R_5$, $R_6$ aus der von Wasserstoff, Halogenen und Alkyl-, Alkenyl- und cycloaliphatischen und aromatischen Resten gebildeten Gruppe ausgewählt sind und wobei $R_1$, $R_2$, $R_3$, $R_4$, $R_5$, $R_6$ nicht gleichzeitig Wasserstoff bedeuten.

2. Verfahren nach Anspruch 1, dadurch gekennzeichnet, daß das substituierte Hydroxychinolin die allgemeine Formel

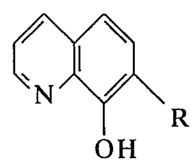

hat, in der R ein Alkenylrest mit 2 bis 20 Kohlenstoffatomen ist.

3. Verfahren nach Anspruch 2, dadurch gekennzeichnet, daß das substituierte Hydroxychinolin die allgemeine Formel

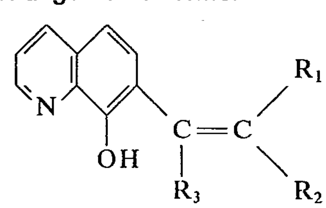

hat, in der $R_1$, $R_2$, $R_3$ Wasserstoff oder eine Kohlenwasserstoffgruppe bedeuten.

4. Verfahren nach Anspruch 2, dadurch gekennzeichnet, daß das substituierte Hydroxychinolin die allgemeine Formel

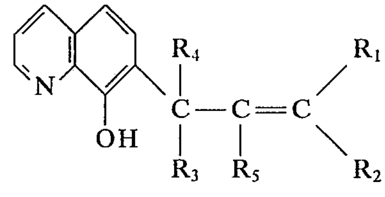

hat, in der $R_1$, $R_2$, $R_3$, $R_4$, $R_5$ Wasserstoff oder eine

Kohlenwasserstoffgruppe bedeuten.

5. Verfahren nach Anspruch 1, dadurch gekennzeichnet, daß das substituierte Hydroxychinolin die allgemeine Formel

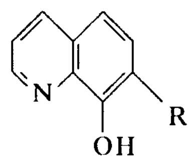

hat, in der R einen Rest mit 1 bis 20 Kohlenstoffatomen aus der Gruppe der Alkylreste und Cycloaliphatreste bedeutet.

6. Verfahren nach Anspruch 1, dadurch gekennzeichnet, daß das substituierte Hydroxychinolin die allgemeine Formel

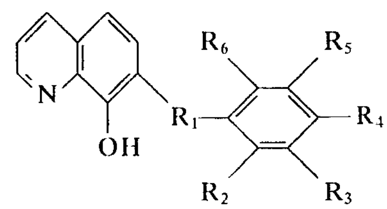

hat, in der $R_1$ einen Alkylrest, $R_2$, $R_3$, $R_4$, $R_5$, $R_6$ Wasserstoff oder eine Kohlenwasserstoffgruppe bedeuten.

7. Verfahren nach Anspruch 1, dadurch gekennzeichnet, daß das substituierte Hydroxychinolin die allgemeine Formel

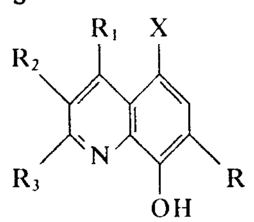

hat, in der X ein Halogen, R ein Alkyl- oder Alkenylrest mit 5 bis 20 Kohlenstoffatomen und die gleichen oder verschiedenen Reste $R_1$, $R_2$, $R_3$ Wasserstoff oder Alkylreste mit vorzugsweise 1 bis 4 Kohlenstoffatomen sind.

8. Verfahren nach Anspruch 1, dadurch gekennzeichnet, daß die organische Phase zusätzlich wenigstens ein organisches Lösungsmittel aus der Gruppe der aromatischen Kohlenwasserstoffe, der aliphatischen Kohlenwasserstoffe, der halogenierten Kohlenwasserstoffe, der Erdölfraktionen und der Petroläther enthält.

9. Verfahren nach Anspruch 1, dadurch gekennzeichnet, daß die organische Phase zusätzlich wenigstens ein Modifizierungsmittel aus der Gruppe von Verbindungen mit einer Alkoholfunktion, den Phosphorestern, den Phosphinoxiden und den Sulfoxiden enthält.

10. Verfahren nach Anspruch 1, dadurch gekennzeichnet, daß die Elemente der die Lanthanide und Yttrium umfassenden Gruppe in der wäßrigen Phase als Chloride, Nitrate, Sulfate, Perchlorate oder Thiocyanate vorliegen.

11. Verfahren nach Anspruch 1, dadurch gekennzeichnet, daß der pH-Wert der wäßrigen Phase zwischen 1 und 8 liegt.

12. Verfahren nach Anspruch 11, dadurch gekennzeichnet, daß der pH-Wert der wäßrigen Phase durch Zugabe einer Base eingestellt wird.

13. Verfahren zur Trennung wenigstens eines Elementes aus der die Lanthanide und Yttrium umfassenden Gruppe von den anderen Elementen dieser Gruppe, die in einer wäßrigen Lösung vorliegen, durch Lösungsmittelextraktion, dadurch gekennzeichnet, daß

— man in einer ersten Stufe die die Lanthanide und Yttrium in dreiwertigem Zustand enthaltende wäßrige Lösung mit einer organischen Phase in Berührung bringt, die wenigstens ein substituiertes Hydroxychinolin der allgemeinen Formel

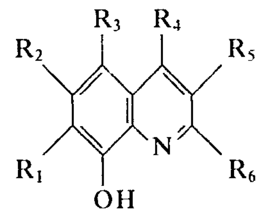

enthält, in der die gleichen oder verschiedenen Reste $R_1$, $R_2$, $R_3$, $R_4$, $R_5$, $R_6$ aus der Gruppe von Wasserstoff, den Halogenen, Alkyl- und Alkenylresten, cycloaliphatischen und aromatischen Reste ausgewählt sind, wobei $R_1$, $R_2$, $R_3$, $R_4$, $R_5$, $R_6$ nicht gleichzeitig Wasserstoff sein dürfen;

— in einer zweiten Stufe das extrahierte Element oder die extrahierten Elemente aus der organischen Phase gewinnt, indem man sie mit der wäßrigen Lösung einer Mineralsäure in Berührung bringt.

14. Verfahren nach Anspruch 13, dadurch gekennzeichnet, daß die Mineralsäure aus der von Salzsäure, Salpetersäure, Perchlorsäure und Schwefelsäure gebildeten Gruppe ausgewählt ist.

## Claims

1. Process for the separation, by solvent extraction, of at least one element, chosen from amongst the group comprising the lanthanides and yttrium, from the other elements of this group, contained in an aqueous solution, characterised in that the said aqueous solution containing the lanthanides and yttrium in the trivalent state is brought into contact with an organic phase containing at least one substituted hydroxyquinoline of the general formula

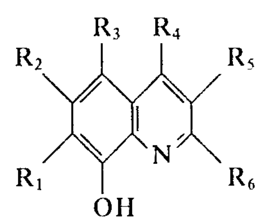

in which $R_1$, $R_2$, $R_3$, $R_4$, $R_5$ and $R_6$, which are

identical or different, are chosen from amongst the group comprising hydrogen, the halogens and alkyl, alkenyl, cycloaliphatic and aromatic radicals, it being impossible for $R_1$, $R_2$, $R_3$, $R_4$, $R_5$ and $R_6$ to represent hydrogen simultaneously.

2. Process according to Claim 1, characterised in that the substituted hydroxyquinoline has the general formula:

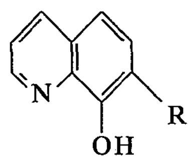

in which R is an alkenyl radical containing 2 to 20 carbon atoms.

3. Process according to Claim 2, characterised in that the substituted hydroxyquinoline has the general formula:

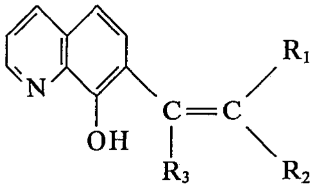

in which $R_1$, $R_2$ and $R_3$ represent hydrogen or a hydrocarbon group.

4. Process according to Claim 2, characterised in that the substituted hydroxyquinoline has the general formula:

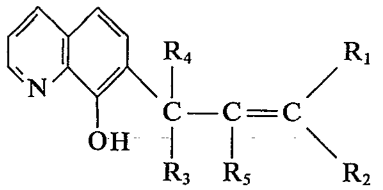

in which $R_1$, $R_2$, $R_3$, $R_4$ and $R_5$ represent hydrogen or a hydrocarbon group.

5. Process according to Claim 1, characterised in that the substituted hydroxyquinoline has the general formula:

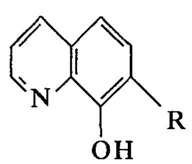

in which R represents a radical which contains from 1 to 20 carbon atoms and is taken from the group comprising at least one of the alkyl and cycloaliphatic radicals.

6. Process according to Claim 1, characterised in that the substituted hydroxyquinoline has the general formula

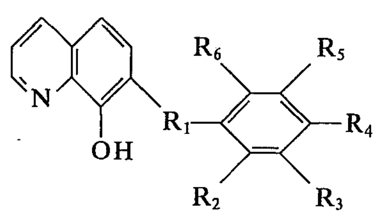

in which $R_1$ represents an alkyl radical and $R_2$, $R_3$, $R_4$, $R_5$ and $R_6$ represent hydrogen or a hydrocarbon group.

7. Process according to Claim 1, characterised in that the substituted hydroxyquinoline has the general formula

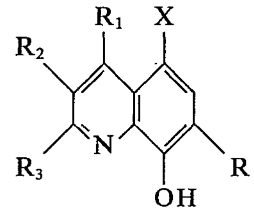

in which X is chosen from amongst the group comprising the halogens, R is an alkyl or alkenyl radical containing from 5 to 20 carbon atoms, and $R_1$, $R_2$ and $R_3$, which are identical or different, are chosen from amongst the group comprising hydrogen and alkyl groups preferably having from 1 to 4 carbon atoms.

8. Process according to Claim 1, characterised in that the organic phase also contains at least one organic diluent chosen from amongst the group comprising aromatic hydrocarbons, aliphatic hydrocarbons, halogenohydrocarbons, petroleum cuts and petroleum ethers.

9. Process according to Claim 1, characterised in that the organic phase also contains at least one modifier chosen from amongst the group comprising substances with an alcohol group, phosphoric acid esters, phosphine oxides and sulphoxides.

10. Process according to Claim 1, characterised in that the elements of the group comprising the lanthanides and yttrium are in the aqueous phase in the form of chlorides, nitrates, sulphates, perchlorates or thiocyanates.

11. Process according to Claim 1, characterised in that the pH of the aqueous phase is between 3 and 8.

12. Process according to Claim 11, characterised in that the pH of the aqueous phase is adjusted by adding a base.

13. Process for the separation, by solvent extraction, of at least one element, chosen from amongst the group comprising the lanthanides and yttrium, from the other elements of this group, contained in an aqueous solution, characterised in that:

— in a first step, the said aqueous solution containing the lanthanides and yttrium in the trivalent state is brought into contact with an organic phase containing at least one substituted hydroxyquinoline of the generallformula

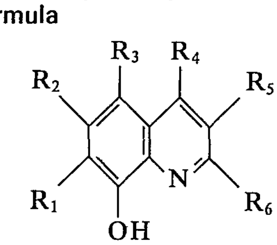

in which $R_1$, $R_2$, $R_3$, $R_4$, $R_5$ and $R_6$, which are

identical or different, are chosen from amongst the group comprising hydrogen, the halogens and alkyl, alkenyl, cycloaliphatic and aromatic radicals, it being impossible for $R_1$, $R_2$, $R_3$, $R_4$, $R_5$ and $R_6$ to represent hydrogen simultaneously, and,

— in a second step, the element or elements extracted are recovered from the organic phase by bringing the latter into contact with an aqueous solution of a mineral acid.

14. Process according to Claim 13, characterised in that the mineral acid is chosen from amongst the group comprosing hydrochloric acid, nitric acid, perchloric acid and sulphuric acid.